# EUROPEAN PATENT SPECIFICATION

(11) **EP 2 986 360 B1**
(45) Date of publication and mention of the grant of the patent: **26.09.2018**
(21) Application number: 14785814.6
(22) Date of filing: 14.04.2014
(51) Int. Cl.: B01D 63/02, B01D 63/04, B01D 53/22, C02F 1/44, H01M 8/04119

(54) **HOLLOW FIBER MODULE**
HOHLFASERMODUL
MODULE À FIBRES CREUSES

(30) Priority: 18.04.2013 KR 20130042826
(43) Date of publication of application: 24.02.2016
(73) Proprietor: Kolon Industries, Inc., Gwacheon-si, Gyeonggi-do 13837 (KR)
(72) Inventor: LEE, Moo Seok, Seoul 133-782 (KR); KIM, Kyoung Ju, Yongin-si Gyeonggi-do 446-750 (KR); LEE, Jin Hyung, Yongin-si Gyeonggi-do 448-980 (KR); OH, Young Seok, Yongin-si Gyeonggi-do 446-797 (KR)
(74) Representative: Ter Meer Steinmeister & Partner
(86) International application number: PCT/KR2014/003177
(87) International publication number: WO 2014/171677

(56) References cited:
- WO-A1-2012/044441
- WO-A1-2012/091070
- WO-A1-2012/091070
- WO-A2-2011/068383
- JP-A- 2009 202 112
- KR-A- 20130 034 404
- US-B2- 8 414 693

## Description

### Technical Field

The present invention relates to a hollow fiber module. More particularly, the present invention relates to a hollow fiber module maximizing the fluid delivery efficiency by improving the flow uniformity of the fluid flowing the outside of the hollow fibers, and minimizing the additional usage of the hollow fibers, so as to reduce the cost and the size of the hollow fiber module.

### Background Art

A fuel cell is defined as an electricity-generating cell that generates electricity through combination of hydrogen and oxygen. Unlike general cells such as dry cells, storage cells and the like, fuel cells have advantages in that they can keep generating electricity for as long as hydrogen and oxygen are supplied, and are free from heat loss and thus have about twice the efficiency of internal combustion engines. In addition, since fuel cells directly convert chemical energy, generated by combination of hydrogen and oxygen, to electrical energy, they release almost no contaminants. Accordingly, fuel cells have other advantages of environmental friendliness and the ability to reduce concerns about depletion of resources in accordance with an increase in energy consumption.

Based on the type of electrolyte used, fuel cells are largely classified into polymer electrolyte membrane fuel cells (PEMFCs), phosphoric acid fuel cells (PAFCs), molten carbonate fuel cells (MCFCs), solid oxide fuel cells (SOFCs), alkaline fuel cells (AFCs) and the like. These various types of fuel cells essentially operate on the same principle, but are different in terms of the type of fuel used, operation temperature, catalyst, electrolyte and the like. Of these, polymer electrolyte fuel cells are known to be the most promising in the fields of transport systems as well as small-scale stationary electricity-generators, because they operate at lower temperatures and are capable of realizing miniaturization due to their higher power density, as compared to other fuel cells.

One of the most important factors in improving the performance of polymer electrolyte fuel cells is to maintain moisture content in the polymer electrolyte membrane of membrane electrode assembly by providing moisture in an amount not less than a predetermined level. This is the reason that polymer electrolyte membranes show a rapid decrease in electricity-generation efficiency, when dried.

Methods for humidifying polymer electrolyte membranes include 1) a bubbler humidification method that supplies moisture by filling a internal pressure vessel with water and passing a target gas through a diffuser, 2) a direct injection method that supplies moisture by calculating a moisture supply amount required for the reaction of fuel cells and directly supplying the amount of moisture through a solenoid valve to a gas flow pipe, 3) a humidifying-membrane method that supplies moisture to a gas flow layer using a polymeric separation membrane, and the like. Of these, the humidifying-membrane method, which humidifies a polymer electrolyte membrane by supplying water vapor to a gas provided to the polymeric electrolyte membrane using a membrane that selectively permeates water vapor contained in an exhaust gas, is highly advantageous in that a humidifier can be light-weight and miniaturized.

The selective permeation membrane used for the humidification membrane method is preferably a hollow fiber membrane which has a high index of permeation area per unit volume in case of module formation. That is, the use of a hollow fiber membrane for production of humidifiers has advantages in that fuel cells can be sufficiently humidified even with a small amount due to the possibility of high-integration of the hollow fiber membrane with a wide contact surface area, inexpensive materials are available, and moisture and heat contained in an unreacted hot gas discharged from fuel cells can be recovered and then recycled through the humidifier.

However, the humidification membrane using the hollow fiber may include a greater number of the hollow fibers in order to increase the capacity of it. In this case, the size of the humidification membrane become large unnecessarily since the usage efficiency of the hollow fibers is dramatically decreased. That is, the fluid flowing the outside of the hollow fibers could not penetrate the thickened hollow fiber bundle, and thus the fluid could not flow uniformly.

### [Citation List]

### [Patent Literature]

(Patent document 0001) Korean Patent Laid-Open Publication No. 10-2009-0013304, 2009.02.05
(Patent document 0002) Korean Patent Laid-Open Publication No. 10-2009-0057773, 2009.06.08
(Patent document 0003) Korean Patent Laid-Open Publication No. 10-2009-0128005, 2009.12.15
(Patent document 0004) Korean Patent Laid-Open Publication No. 10-2010-0108092, 2010.10.06
(Patent document 0005) Korean Patent Laid-Open Publication No. 10-2010-0131631, 2010.12.16
(Patent document 0006) Korean Patent Laid-Open Publication No. 10-2011-0001022, 2011.01.06
(Patent document 0007) Korean Patent Laid-Open Publication No. 10-2011-0006122, 2011.01.20
(Patent document 0008) Korean Patent Laid-Open Publication No. 10-2011-0006128, 2011.01.20
(Patent document 0009) Korean Patent Laid-Open Publication No. 10-2011-0021217, 2011.03.04
(Patent document 0010) Korean Patent Laid-Open Publication No. 10-2011-0026696, 2011.03.16
(Patent document 0011) Korean Patent Laid-Open Publication No. 10-2011-0063366, 2011.06.10

WO2012091070 (& EP2659951) discloses an adsorption/ separation membrane module comprising hollow fibers.

The above information disclosed in this Background section is only for enhancement of understanding of the background of the invention and therefore it may contain information that does not form the prior art that is already known in this country to a person of ordinary skill in the art.

### Disclosure of Invention

### Technical Problem

The present invention has been made in an effort to provide a hollow fiber module having advantages of maximizing the fluid delivery efficiency by improving the flow uniformity of the fluid flowing the outside of the hollow fibers, and minimizing the additional usage of the hollow fibers, so as to reduce the cost and the size of the hollow fiber module.

### Solution to Problem

A hollow fiber module in various aspects of the present invention may include: a housing, and a hollow fiber bundle mounted in the housing and having a fluid penetration distance ranged from 10 to 200mm. The fluid penetration distance means the shortest distance from the outmost hollow fiber in a cross-section of the hollw fiber bundle to the hollow fiber existing at the center in the cross-section of the hollw fiber bundle.

The ratio of the fluid penetration distance to the lenth of the hollow fiber bundle may be in the range of 5 to 100%.

The hollow fiber bundle may have a wide and flat shape.

The thickness of the hollow fiber bundle may be in the range of 20 to 400mm.

The ratio of the thickness to the width may be in the range of 10 to 100%.

The hollow fiber bundle may comprise a plurality of the hollow fibers in the amount of 30 to 60 vol% relative to the total volume of the hollow fiber bundle.

The hollow fiber module may comprise the hollow fiber bundles and a barrier deviding the hollow fiber bundles.

The hollow fiber module may comprise a plurality of the barriers, and the barrier is disposed to surround each of the hollow fiber bundle.

The barrier may have through-holes.

The housing may have a circular or an angular cross-sectional shape.

The housing may be opened at both ends, and the housing may have an inlet port and an outlet port.

The hollow fiber module may further comprise a potting portion fixing an end portion of the hollow fiber bundle to the housing and coupled to an end portion of the housing so as to hermetically seal the housing.

The hollow fiber module may further comprise a cover coupled to an end portion of the housing and having a fluid port.

The hollow fiber module is any one selected from the group consisting of a gas separating module, a heat exchanging module, a humidifying module and a water-treatment module.

### Advantageous Effects of Invention

In accordance with various embodiments of the present invention, the hollow fiber module may maximize the fluid delivery efficiency by improving the flow uniformity of the fluid flowing the outside of the hollow fibers. In addition, the hollow fiber module may minimize the additional usage of the hollow fibers, and thus the cost and the size of the hollow fiber module may be reduced.

### Brief Description of Drawings

The above and other objects, features and other advantages of the present invention will be more clearly understood from the following detailed description taken in conjunction with the accompanying drawings, in which:
FIG. 1 is a perspective view of a hollow fiber module according to the first exemplary embodiment of the present invention.
FIG. 2 is a perspective view of a hollow fiber module according to the second exemplary embodiment of the present invention.
FIG. 3 is a cross-sectional view taken along line A-A' of FIG. 1.
FIG. 4 is a cross-sectional view of a conventional hollow fiber module.
FIG. 5 is a cross-sectional view taken along line B-B' of FIG. 1.
FIG. 6 is a cross-sectional view taken along line B-B' of FIG. 2.

### Best Mode for Carrying out the Invention

Exemplary embodiments of the present invention will hereinafter be described in detail so as to be easily executed by a person of an ordinary skill in the art. However, the present invention will be realized in various embodiments and is not limited to the exemplary embodiments described herein.

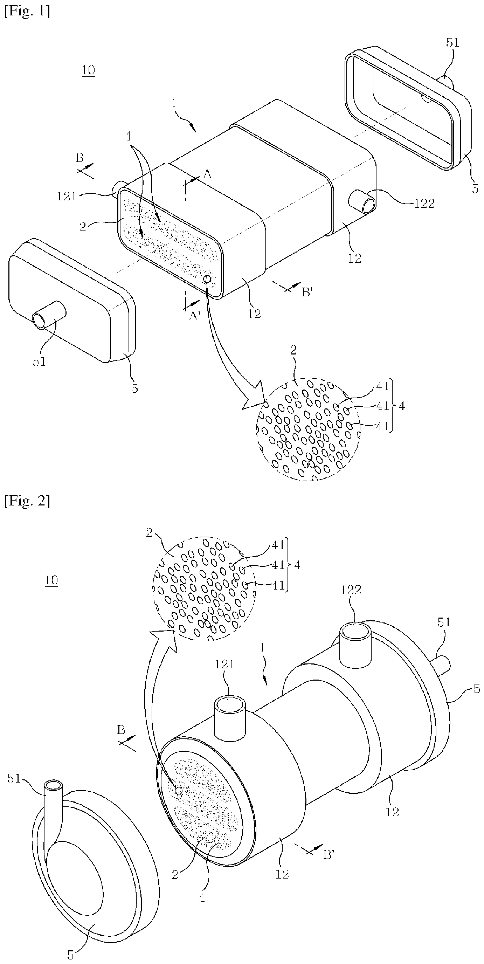

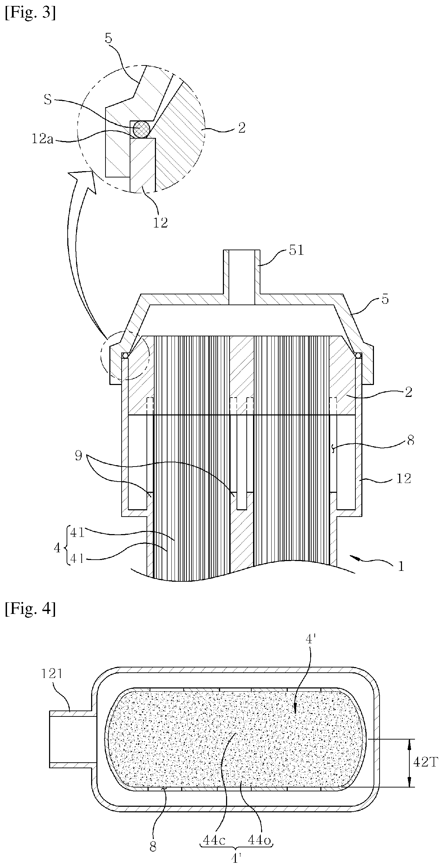

FIG. 1 is a perspective view of a hollow fiber module according to the first exemplary embodiment of the present invention, FIG. 2 is a perspective view of a hollow fiber module according to the second exemplary embodiment of the present invention, and FIG. 3 is a cross-sectional view taken along line A-A' of FIG. 1. In the following description, the hollow fiber module, which is illustrated as an example of a humidifying module, will be described. Of course, the hollow fiber membrane is not limited to the humidifying module, and may be a gas separating module, a heat exchanging module or a water treating module.

Hereinafter, the hollow fiber module according to exemplary embodiments of the present invention will be described in detail with reference to the accompanying drawings. As shown in FIG. 1 to FIG. 3, the hollow fiber module 10 according to the first exemplary embodiment of the present invention includes a housing 1, a hollow fiber bundle 4, a pair of potting portions 2, and a pair of covers 5.

The housing 1 and the covers 5 form a shape of the hollow fiber module 10 and are made of hard plastic such as polycarbonate or metal. Furthermore, the housing 1 and the covers 5 may have a circular cross-sectional shape as shown in FIG. 1 or angular cross-sectional shape as shown in FIG. 2. The angular cross-sectional shape may be a tetragon, a square, a trapezoid, a parallelogram, a pentagon, a hexagon and the like. The corners of the angular cross-sectional shape may be rounded. The circlur cross-sectional shape may be a circle or an oval.

The housing 1 is opened at both ends and includes an outer wall 12 so as to have a cylindrical shape substantially. The opened ends of the housing 1 is filled with the potting portion 2, and the potting portion 2 is enclosed by the outer wall 12 and is bonded to an interior circumference of an end portion of the outer wall 12. An inlet port 121 into which humidified fluid is flowed or an outlet port 122 from which the humidified fluid is discharged is formed at the outer wall 12.

The hollow fiber bundle 4 is mounted in the housing 1. A plurality of hollow fibers 41 are integrated in the hollow fiber bundle 4. The hollow fiber bundle 4 selectively passes the moisture. Material and structure of the hollow fiber 41 are well known to a person of an ordinary skill in the art, and thus detailed description of the hollow fiber 41 will be omitted in this specification.

The potting portion 2 connects end portions of the hollow fibers 41 with each other and fills gaps between the hollow fibers 41. In addition, the potting portion 2 is bonded to an interior circumference of an end portion of the outer wall 12 so as to hermetically seal the housing 1. The humidified fluid may flow inside the housing 1 hermetically sealed by the potting portions 2. Material and structure of the porting portion 2 are well known to a person of an ordinary skill in the art, and thus detailed description of the proting portion 2 will be omitted in this specification.

The cover 5 is coupled to the outer wall 12 of the housing 1 and includes a fluid port 51. An operating fluid flowing in through the fluid port 51 of the first cover 5 passes through a passage formed in the hollow fibers 41 and is discharged through the fluid port 41 of the second cover 5. When the operating fluid passes through the passage formed in the hollow fibers 41, the moisture is supplied to the operating fluid from the humidified fluid through the hollow fibers 41.

As shown in FIG. 3, the potting portion 2 may slope upward from the end 12a of the outer wall 12 toward the center of the housing 1. The hollow fibers 41 may penetrate the potting portion 2 so that the conduits of the hollow fibers 41 is exposed on the end of the potting portion 2. A sealing member S is interposed between the end 12a of the outer wall 12 and the cover 5. The cover 5 may be coupled to the housing 1 while press the sealing member S.

On the other hand, the hollow fiber bundle 4 have a fluid penetration distance ranged from 10 to 200mm, preferably from 20 to 100 mm. Herein, the fluid penetration distance means the shortest distance from the outmost hollow fiber 41 in a cross-section of the hollw fiber bundle 4 to the hollow fiber 41 existing at the center in the cross-section of the hollw fiber bundle 4.

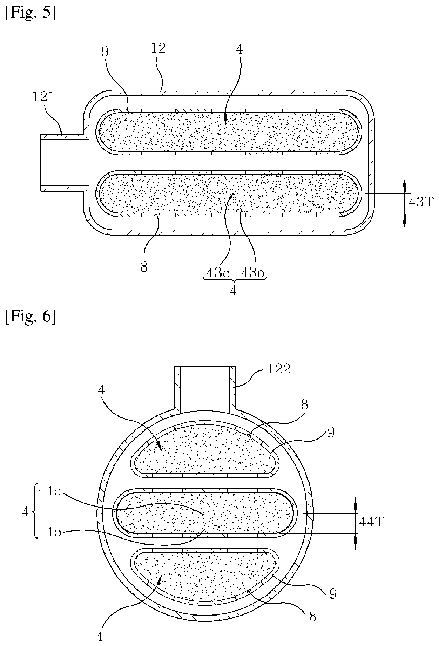

FIG. 4 is a cross-sectional view of a conventional hollow fiber module, FIG. 5 is a cross-sectional view taken along line B-B' of FIG. 1, and FIG. 6 is a cross-sectional view taken along line B-B' of FIG. 2. Hereinafter, the fluid penetration distance will be described with reference to FIG. 4 to FIG. 6.

The cross-section of the hollow fiber bundle 4 is an insection exposed by being taken along the perpendicular direction to the longitudinal direction. Therefore, the cross-sectional shape of the hollow fiber bundle 4 is formed by the aggregation of the hollow fibers 41.

The hollow fiber bundle 4 may have numberless cross-sections along the longitudinal direction. The cross-section for measuring the fluid penetration distance may be any one of the numberless cross-sections of the hollow fiber bundle 4. Representatively, the cross-section which exists at the end of the hollow fiber bundle 4, exposed by penetrating the potting portion 2, is used for measuring the fluid penetration distance.

Futhermore, the outmost hollow fiber 41 in the cross-section of the hollw fiber bundle 4 may exist in the surface of the hollow fiber bundle 4. The center in the cross-section of the hollw fiber bundle 4 means the center of gravity. If there is no hollow fiber 41 in the center of gravity, the hollow fiber 41 existing at the center in the cross-section of the hollw fiber bundle 4 is the closest hollow fiber 41 to the center of gravity.

As shown FIG. 4, in case of the conventioanl hollow fiber bundle 4', the shortest distance 42T from the outmost hollow fiber 42o in a cross-section of the hollw fiber bundle 4 to the hollow fiber 41c existing at the center in the cross-section of the hollw fiber bundle 4 exceeds 200mm. Therefore, the fluid flowing the outside of the hollow fibers 41 could not penetrate the thickened hollow fiber bundle 4, and thus the fluid could not flow uniformly.

As shown FIG. 5 and FIG. 6, the shortest distance 43T, 44T from the outmost hollow fiber 43o, 44o in a cross-section of the hollw fiber bundle 4 to the hollow fiber 42c, 43c existing at the center in the cross-section of the hollw fiber bundle 4 ranges from 10 to 200mm. If the fluid penetration distance 43T, 44T is in the range, the fluid flowing the outside of the hollow fibers 41 could easily penetrate the hollow fiber bundle 4, and thus the performance of the hollow fiber module 10 is maximaized by improving the flow uniformly of the fluid. In addition, since the hollow fiber module 10 may include a smaller number of the hollow fibers 41 in order to increase the capacity of the hollow fiber module 10, the cost and the size of the hollow fiber module 10 may be reduced.

The ratio of the fluid penetration distance 43T, 44T to the lenth of the hollow fiber bundle 4 is in the range of 5 to 100%, preferably 10 to 60%. If the ratio is less than 5%, the thickness of the hollow fiber bundle 4 is too thin to include a sufficient number of the hollow fibers 41, and if the ratio exceeds 100%, the fluid flowing the outside of the hollow fibers 41 could not penetrate the thickened hollow fiber bundle 4, and thus the usage efficiency of the hollow fibers 41 is decreased.

The hollow fiber bundle 4 may have a wide and flat shape. The wide and flat shape is even along the longitudinal direction, its width is wide, and its thickness is thin. Herein, the width may be longer than the thickness.

The thickness of the hollow fiber bundle 4 is in the range of 20 to 400mm, preferably 40 to 100mm. If the thickness of the flat and wide hollow fiber 4 is in the range, the fluid flowing the outside of the hollow fibers 41 could easily penetrate the hollow fiber bundle 4, and thus the performance of the hollow fiber module 10 is maximaized by improving the flow uniformly. In addition, since the hollow fiber module 10 may include a smaller number of the hollow fibers 41 in order to increase the capacity of the hollow fiber module 10, the cost and the size of the hollow fiber module 10 may be reduced.

The ratio of the thickness to the width is in the range of 10 to 100%, preferably 20 to 60%. If the ratio of the thickness to the width is less than 10%, it becomes difficult to induce the flow uniformity along the width direction, and thus the usage efficiency of the hollow fibers 41 is decreased, and if the ratio of the thickness to the width exceeds 100%, the thickness of the hollow fiber bundle 4 is too thin to include a sufficient number of the hollow fiber 41.

The hollow fiber bundle 4 may comprise the hollow fibers 41 in the amount of 30 to 60 vol% relative to the total volume of the hollow fiber bundle 4. If the amount of the hollow fibers 41 is less than 30 vol%, the hollow fiber bundle 4 could not sufficiently include the hollow fibers 41, so that the size of the hollow fiber module 10 become large unnecessarily, and if the amount of the hollow fibers 41 exceeds 60 vol%, the density of the hollow fibers 41 is so great that it become to difficult to manufacture the hollow fiber module 10, and the pressure drop caused by the fluid flowing the outside of the hollow fiber 41 become larger.

The hollow fiber module 10 may comprises a pluarlity of the hollow fiber bundles 4 and a barrier 9 deviding the hollow fiber bundles 4. Also, the barrier 9 has through-holes so that the humidified fluid passes the barrier 9 through the through-hole 8 and flows the outside of the hollow fibers 41.

In addition, the hollow fiber module 10 may further comprise a plurality of the barriers 9, and the barrier 9 is disposed to surround each of the hollow fiber bundle 4.

The operating fluid flowing in through the fluid port 51 of the first cover 5 passes through a passage formed in the hollow fibers 41 and is discharged through the fluid port 41 of the second cover 5. On the other hand, the humidified fluid flowing in through the inlet port 121 of the housing 1 passes the outside of the hollow fibers 41, and then the humidified fluid flows out through the outlet port 122 of the housing 1. While the operating fluid and the humidified fluid respectively flow the inside and the outside of the hollow fibers 41, the operating fluid and the humidified fluid exchange a heat or materials such as moisture.

Although the operating fluid flows the inside of the hollow fibers 41 and the humidified fluid flows the outside of the hollow fibers 41 according to one exemplary embodiment of the present invention, the operating fluid may flow the outside of the hollow fibers 41 and the humidified fluid may flow the inside of the hollow fibers 41 according to the other exemplary embodiment of the present invention. Also, the operating fluid and the humidified fluid may flow in an opposite direction to the above discribed direction, and the operating fluid and the humidified fluid may flow in an opposite direction each other.

### [Examples: Preparation of a hollow fiber module]

### (Comparative Example)

A hollow fiber bundle having 14,000 pieces of polysulfone hollow fibers (external diameter: 900um, internal diameter: 800um) were mounted in a housing (width: 250mm, length: 250mm, height: 500mm). Herein, the fluid penetration distance was 205mm.

Molds for forming potting portions were covered in both ends of the housing. A composition for forming the potting protions was injected into the caps and filled gaps between the hollow fibers, and then the compositon was hardened, so as to seal the housing. After the caps were uncovered, the ends of the hollow fiber bundle were exposed by cutting the protruding end of the hardened potting portions. The hollow fiber module was manufactured by caps having a fluid port was covered in both ends of the housing.

### (Example 1)

A pair of hollow fiber bundles respectively having 7,000 pieces of polysulfone hollow fibers (external diameter: 900um, internal diameter: 800um) were mounted in a housing (width: 250mm, length: 250mm, height: 500mm). Herein, the fluid penetration distance was 60mm.

Molds for forming potting portions were covered in both ends of the housing. A composition for forming the potting protions was injected into the caps and filled gaps between the hollow fibers, and then the compositon was hardened, so as to seal the housing. After the caps were uncovered, the ends of the hollow fiber bundle were exposed by cutting the protruding end of the hardened potting portions. The hollow fiber module was manufactured by caps having a fluid port was covered in both ends of the housing.

### (Example 2)

Three hollow fiber bundles respectively having 4,666 pieces of polysulfone hollow fibers (external diameter: 900um, internal diameter: 800um) were mounted in a housing (width: 250mm, length: 250mm, height: 500mm). Herein, the fluid penetration distance was 40mm.

Molds for forming potting portions were covered in both ends of the housing. A composition for forming the potting protions was injected into the caps and filled gaps between the hollow fibers, and then the compositon was hardened, so as to seal the housing. After the caps were uncovered, the ends of the hollow fiber bundle were exposed by cutting the protruding end of the hardened potting portions. The hollow fiber module was manufactured by caps having a fluid port was covered in both ends of the housing.

### (Example 3)

Six hollow fiber bundles respectively having 1,555 pieces of polysulfone hollow fibers (external diameter: 900um, internal diameter: 800um) were mounted in a housing (width: 250mm, length: 250mm, height: 500mm). Herein, the fluid penetration distance was 20mm.

Molds for forming potting portions were covered in both ends of the housing. A composition for forming the potting protions was injected into the caps and filled gaps between the hollow fibers, and then the compositon was hardened, so as to seal the housing. After the caps were uncovered, the ends of the hollow fiber bundle were exposed by cutting the protruding end of the hardened potting portions. The hollow fiber module was manufactured by caps having a fluid port was covered in both ends of the housing.

### [Experiment Example: Performance analysis of the manufactrued hollow fiber module]

Dry air was supplied into the inside and the outside of the hollow fiber bundle respectively of the hollow fiber modules manufacturing the Examples and the Comparative Example. The gas-to-gas humidification was perfomed while the inside condition of the hollow fiber bundle was maintainted at temperature 70°C, humidity 90 RH%, and the ourside condition of the hollow fiber bundle was maintainted at temperature 40°C, humidity 10 RH%.

A humidification performance is measured by calculating a dew point (°C) of the humidified fluid when the humidified fluid was discharged from the inside of the hollow fibers. The dew point was calculated by measuring temperature and humidity of the humidified fluid. The results of the analysis are presented in the following Table 1.

### Table 1

**[Table 1]**

| | Comparative Example | Example 1 | Example 2 | Example 3 |
|---|---|---|---|---|
| humidification performance (°C) | 48 | 56 | 58 | 53 |

According to the results of the above Table 1, it can be seen that the hollow fiber modules manufactured by Examples had an improved humidification performance compared to the hollow fiber module manufactured by Comparative Example.

While this invention has been described in connection with what is presently considered to be practical exemplary embodiments, it is to be understood that the invention is not limited to the disclosed embodiments.

### Mode for the Invention

Various embodiments have been described in the best mode for carrying out the invention.

### Industrial Applicability

The hollow fiber module of the present invention could be used as any one selected from the group consisting of a gas separating module, a heat exchanging module, a humidifying module and a water-treatment module.

The hollow fiber module may maximize the fluid delivery efficiency by improving the flow uniformity of the fluid flowing the outside of the hollow fibers. In addition, the hollow fiber module may minimize the additional usage of the hollow fibers, and thus the cost and the size of the hollow fiber module may be reduced.

## Claims

1. A hollow fiber module (10) comprising:
a housing (1), and
a hollow fiber bundle (4) mounted in the housing (1),
**characterized in that** the hollow fiber bundle (4) has a fluid penetration distance (43T, 44T) ranged from 10 to 200mm and a wide and flat shape,
wherein the fluid penetration distance (43T, 44T) means the shortest distance from the outmost hollow fiber (43o, 44o) in a cross-section of the hollow fiber bundle to the hollow fiber (43c, 44c) existing at the center in the cross-section of the hollow fiber bundle (4),
wherein the cross-section of the hollow fiber bundle (4) is an insection exposed by being taken along the perpendicular direction to the longitudinal direction of the hollow fiber bundle (4),
wherein the outmost hollow fiber (43o, 44o) exists in the surface of the hollow fiber bundle (4), and
wherein the wide and flat shape is even along the longitudinal direction of the hollow fiber bundle (4), the width of the hollow fiber bundle is wide, and the thickness of the hollow fiber bundle is thin, and
wherein the ratio of the thickness of the hollow fiber bundle to the width of the hollow fiber bundle is in the range of 20 to 60%.

2. The hollow fiber module according to claim 1, wherein the ratio of the fluid penetration distance to the length of the hollow fiber bundle is in the range of 5 to 100%.

3. The hollow fiber module according to claim 1, wherein the thickness of the hollow fiber bundle is in the range of 20 to 400mm.

4. The hollow fiber module according to claim 1, wherein the hollow fiber bundle comprises the hollow fibers in the amount of 30 to 60 vol% relative to the total volume of the hollow fiber bundle.

5. The hollow fiber module according to claim 1, comprising a plurality of the hollow fiber bundles and a barrier dividing the hollow fiber bundles.

6. The hollow fiber module according to claim 5, comprising a plurality of the barriers, and the barrier is disposed to surround each of the hollow fiber bundle.

7. The hollow fiber module according to claims 5 or 6, wherein the barrier has through-holes.

8. The hollow fiber module according to claim 1, wherein the housing has a circular or an angular cross-sectional shape.

9. The hollow fiber module according to claim 1, wherein the housing is opened at both ends, and the housing has an inlet port and an outlet port.

10. The hollow fiber module according to claim 1, further comprising a potting portion fixing an end portion of the hollow fiber bundle to the housing and coupled to an end portion of the housing so as to hermetically seal the housing.

11. The hollow fiber module according to claim 1, further comprising a cover coupled to an end portion of the housing and having a fluid port.

12. The hollow fiber module according to claim 1, wherein the hollow fiber module is any one selected from the group consisting of a gas separating module, a heat exchanging module, a humidifying module and a water-treatment module.

## Patentansprüche

1. Hohlfasermodul (10), umfassend:
ein Gehäuse (1), und
ein Hohlfaserbündel (4), das in dem Gehäuse (1) befestigt ist,
**dadurch gekennzeichnet, dass** das Hohlfaserbündel (4) eine Fluideindringtiefe (43T, 44T) im Bereich von 10 bis 200 mm sowie eine breite und flache Form aufweist, wobei sich die Fluideindringtiefe (43T, 44T) auf die kürzeste Entfernung von der in einem Querschnitt des Hohlfaserbündels äußersten Hohlfaser (43o, 44o) zu der in dem Querschnitt des Hohlfaserbündels (4) in der Mitte befindlichen Hohlfaser (43c, 44c) bezieht,
wobei der Querschnitt des Hohlfaserbündels (4) ein Einschnitt ist, der offengelegt wird, indem er entlang der senkrechten Richtung zu der Längsrichtung des Hohlfaserbündels (4) genommen wird,
wobei die äußerste Hohlfaser (43o, 44o) in der Oberfläche des Hohlfaserbündels (4) vorliegt, und
wobei die breite und flache Form entlang der Längsrichtung des Hohlfaserbündels (4) eben ist, die Breite des Hohlfaserbündels breit ist und die Dicke des Hohlfaserbündels dünn ist, und
wobei das Verhältnis von der Dicke des Hohlfaserbündels zu der Breite des Hohlfaserbündels im Bereich von 20 bis 60 % liegt.

2. Hohlfasermodul nach Anspruch 1, wobei das Verhältnis von der Fluideindringtiefe zu der Länge des Hohlfaserbündels im Bereich von 5 bis 100 % liegt.

3. Hohlfasermodul nach Anspruch 1, wobei die Dicke des Hohlfaserbündels im Bereich von 20 bis 400 mm liegt.

4. Hohlfaserbündel nach Anspruch 1, wobei das Hohlfaserbündel die Hohlfasern in einer Menge von 30 bis 60 Vol.-%, bezogen auf das Gesamtvolumen des Hohlfaserbündels, umfasst.

5. Hohlfasermodul nach Anspruch 1, das mehrere der Hohlfaserbündel und eine Barriere, die die Hohlfaserbündel unterteilt, umfasst.

6. Hohlfasermodul nach Anspruch 5, das mehrere der Barrieren umfasst und wobei die Barriere so angeordnet ist, dass sie jedes der Hohlfaserbündel umgibt.

7. Hohlfasermodul nach Anspruch 5 oder 6, wobei die Barriere Durchgangsöffnungen aufweist.

8. Hohlfasermodul nach Anspruch 1, wobei das Gehäuse eine runde oder eckige Querschnittsform aufweist.

9. Hohlfasermodul nach Anspruch 1, wobei das Gehäuse an beiden Enden geöffnet ist und das Gehäuse eine Einlassöffnung und eine Auslassöffnung aufweist.

10. Hohlfasermodul nach Anspruch 1, das ferner einen Vergussabschnitt umfasst, der einen Endabschnitt des Hohlfaserbündels an dem Gehäuse fixiert und mit einem Endabschnitt des Gehäuses verbunden ist, um das Gehäuse hermetisch abzudichten.

11. Hohlfasermodul nach Anspruch 1, das ferner eine Abdeckung umfasst, die mit einem Endabschnitt des Gehäuses verbunden ist und eine Fluidöffnung aufweist.

12. Hohlfasermodul nach Anspruch 1, wobei das Hohlfasermodul eines ist, das aus der Gruppe bestehend aus einem Gastrennungsmodul, einem Wärmetauschmodul, einem Befeuchtungsmodul und einem Wasseraufbereitungsmodul ausgewählt wird.

## Revendications

1. Un module à fibres creuses (10) comprenant:
un boîtier (1), et
un faisceau de fibres creuses (4) monté dans le boîtier (1)
**caractérisé en ce que** le faisceau de fibres creuses (4) a une distance de pénétration du fluide (43T, 44T) situé dans la plage entre 10 et 200 millimètres et une forme large et plate,
dans lequel la distance de pénétration du fluide (43T, 44T) signifie la distance la plus courte de la fibre creuse la plus éloignée (43o, 44o) dans une section transversale du faisceau de fibres creuses à la fibre creuse (43c, 44c) existant au centre dans la section transversale du faisceau de fibres creuses (4),
dans lequel la section transversale du faisceau de fibres creuses (4) est une incision exposée en étant effectuée le long d'une direction perpendiculaire à la direction longitudinale du faisceau de fibres creuses (4)
dans lequel la fibre creuse la plus extérieure (43o, 44o) existe dans la surface du faisceau de fibres creuses (4), et
dans lequel la forme large et plate et régulière le long d'une direction longitudinale du faisceau de fibres creuses (4), la largeur du faisceau de fibres creuses et large, et l'épaisseur du faisceau de fibres creuses est mince, et
dans lequel le rapport de l'épaisseur du faisceau de fibres creuses à la largeur du faisceau de fibres creuses se trouve dans la plage de 20 à 60 %.

2. Le module à fibres creuses selon la revendication 1, dans lequel le rapport entre la distance de pénétration du fluide et la longueur du faisceau de fibres creuses se trouve dans la plage de 5 et 100%.

3. Le module de fibres creuses selon la revendication 1, dans lequel l'épaisseur du faisceau de fibres creuses est comprise entre 20 et 400 mm.

4. Le module de fibres creuses selon la revendication 1, dans lequel le faisceau de fibres creuses comprend les fibres creuses en une quantité de 30 à 60% en volume par rapport au volume total du faisceau de fibres creuses.

5. Le module de fibres creuses selon la revendication 1, comprenant une pluralité des faisceaux de fibres creuses et une barrière séparant les faisceaux de fibres creuses.

6. Le module de fibres creuses selon la revendication 5, comprenant une pluralité de barrières, et la barrière est disposée pour entourer chacun des faisceaux de fibres creuses.

7. Le module de fibres creuses selon la revendication 5 ou 6, dans lequel la barrière a des trous traversants.

8. Le module de fibres creuses selon la revendication 1, dans lequel le boîtier a une forme de section transversale circulaire ou angulaire.

9. Le module de fibres creuses selon la revendication 1, dans lequel le boîtier est ouvert aux deux extrémités, et le boîtier comporte un orifice d'entrée et un orifice de sortie.

10. Le module de fibres creuses selon la revendication 1, comprenant en outre une partie de mise en place fixant une partie d'extrémité du faisceau de fibres creuses au boîtier et couplée à une partie d'extrémité du boîtier de façon à sceller hermétiquement le boîtier.

11. Le module de fibres creuses selon la revendication 1, comprenant en outre un couvercle couplé à une partie d'extrémité du boîtier et ayant un orifice de fluide.

12. Le module de fibres creuses selon la revendication 1, dans lequel le module à fibres creuses est l'un quelconque choisi parmi le groupe constitué par un module de séparation de gaz, un module d'échange de chaleur, un module d'humidification et un module de traitement d'eau.
